Europäisches Patentamt

European Patent Office

Office européen des brevets

(11) Veröffentlichungsnummer: **0 296 423 B1**

(12) **EUROPÄISCHE PATENTSCHRIFT**

(45) Veröffentlichungstag der Patentschrift: **22.07.92**

(51) Int. Cl.<sup>5</sup>: **G01N 3/04**

(21) Anmeldenummer: **88109269.6**

(22) Anmeldetag: **10.06.88**

(54) **Probeneinspannvorrichtung für Prüfmaschinen.**

(30) Priorität: **19.06.87 DE 3720303**
**27.11.87 DE 3740227**

(43) Veröffentlichungstag der Anmeldung:
**28.12.88 Patentblatt 88/52**

(45) Bekanntmachung des Hinweises auf die
Patenterteilung:
**22.07.92 Patentblatt 92/30**

(84) Benannte Vertragsstaaten:
**CH DE FR GB LI**

(56) Entgegenhaltungen:
**DE-A- 3 124 877**
**DE-A- 3 346 429**
**GB-A- 1 132 815**

(73) Patentinhaber: **CARL SCHENCK AG**
**Landwehrstrasse 55 Postfach 40 18**
**W-6100 Darmstadt(DE)**

(72) Erfinder: **Gernhart, Peter**
**Bergstrasse 1**
**W-8763 Klingenberg(DE)**
Erfinder: **Hintz, Gerhard**
**Holzgasse 44**
**W-6101 Rossdorf(DE)**
Erfinder: **Keller, Günter**
**Am Felsenkeller 47**
**W-6101 Modautal 1(DE)**
Erfinder: **Pohl, Andreas**
**Ringstrasse 69**
**W-6114 Gross-Umstadt(DE)**
Erfinder: **Jatho, Ralf**
**Weedring 5**
**W-6104 Seeheim-Jugenheim(DE)**

(74) Vertreter: **Brandt, Ernst-Ulrich**
**Fa. Carl Schenck AG Patentabteilung Land-**
**wehrstrasse 55 Postfach 40 18**
**W-6100 Darmstadt 1(DE)**

**Beschreibung**

Die Erfindung betrifft eine Probeneinspannvorrichtung für Prüfmaschinen, insbesondere für Schnellzerreißversuche, mit einem Einspannkopf und einer am Einspannkopf angeordneten Kraftmeßeinrichtung, die mit einem festen oder beweglichen Teil der Prüfmaschine verbunden ist.

Bei Prüfmaschinen ist es bekannt, an einem Einspannkopf für die Probe eine Kraftmeßeinrichtung anzuordnen (DE-A-1 773 642). Die Kraftmeßeinrichtung ist meist an einem Querjoch oder an einer Quertraverse der Prüfmaschine befestigt und ihrerseits wieder mit einem Einspannkopf verbunden.

Bei Prüfaufgaben mit sehr schnellen Abläufen, z. B. bei Schnellzerreißversuchen, war es bisher nicht möglich, den Kraftverlauf und den Wegverlauf über der Zeit mit einfachen Mitteln genügend genau zu erfassen. Bei der Kraftmessung führen die Teilmassen aus Spannzeug bzw. Einspannvorrichtung und Kraftaufnehmer zu niedrigen Eigenfrequenzen, welche die Messung hochfrequenter Vorgänge behindern oder unmöglich machen. Eine direkte Wegmessung in Probennähe war in solchen Fällen mit den bisher bekannten Methoden nicht möglich.

Es ist Aufgabe der vorliegenden Erfindung, eine Probeneinspannvorrichtung für Prüfmaschinen zu schaffen, welche die Nachteile des bekannten Standes der Technik vermeidet und welche es erlaubt, insbesondere bei Schnellzerreißversuchen, gleichzeitig Kraft- und Wegmessungen mit einfachen Mitteln durchzuführen. Diese Aufgabe wird durch die in den Patentansprüchen angegebenen Merkmale gelöst. Die Patentansprüche beziehen sich auch auf Ausgestaltungen der Erfindung.

Durch die Kombination einer in die Einspannvorrichtung einer Prüfmaschine integrierten leichten Kraftmeßeinrichtung mit einer Wegmeßeinrichtung, bei der ein von einer am Einspannkopf angeordneten Spiegelfläche reflektierter Lichtstrahl entweder direkt oder über mindestens eine weitere Spiegelfläche auf einen Positionsdetektor mit nachgeschalteter Auswerteelektronik geleitet wird, lassen sich insbesondere bei schnellen Prüfabläufen erheblich verbesserte Meßergebnisse sowohl bei der Kraftmessung als auch bei der Wegmessung bzw. Verformungsmessung erzielen. Für Messungen bei Schwingungsbelastungen sowie Weg- und Geschwindigkeitsmessungen an extrem beschleunigten Proben oder Prüfkörpern, z. B. in Schnellzerreißmaschinen ist die erfindungsgemäße Ausgestaltung besonders geeignet. Durch die besondere Gestaltung der Grundplatte, die einerseits Bestandteil des Einspannkopfes ist und andererseits einen Teil des Kraftaufnehmers darstellt, werden gegenüber bisher bekannten Lösungen erhebliche Massen eingespart und eine wesentliche Erhöhung der Eigenfrequenz der Einspannvorrichtung erreicht.

Bei der Ausgestaltung nach Anspruch 3, bei der der Lichtstrahl über eine weitere Spiegelfläche auf den Positionsdetektor gelenkt wird, ist es besonders vorteilhaft, daß beide Spiegelflächen die Absolutbewegungen der Maschine mitmachen, so daß diese Absolutbewegungen vollständig kompensiert werden. Die Positionierung von Lichtquelle, Spiegeln und Positionsdetektoren ist wesentlich vereinfacht. Durch die vereinfachte Positionierung dieser Elemente ergibt sich eine Verringerung des zu Meßfehlern führenden Winkelversatzes.

Eine besonders einfache und trotzdem genaue Positionierung ist bei einer Ausgestaltung gegeben, bei der die Strahlrichtung der Lichtquelle derart gewählt ist, daß der Strahl in einer rechtwinklig zu den Spiegelflächen verlaufenden Ebene und im wesentlichen rechtwinklig zur Längsachse bzw. Kraftübertragungsachse verläuft, wobei die beiden Spiegelflächen unter einem Winkel von 45° zur Längsachse bzw. Kraftübertragungsachse angeordnet sind.

Insbesondere bei schnell beschleunigten Proben ist es vorteilhaft, die Spiegelflächen am Einspannkopf auszuformen.

Ausführungsbeispiele der Erfindung sind in der Zeichnung dargestellt und werden in der Beschreibung näher erläutert.

Es zeigen:

Fig. 1: einen an der Quertraverse einer Prüfmaschine angeordneten Einspannkopf für eine Materialprobe,

Fig. 2: eine Probeneinspannvorrichtung mit zwei Einspannköpfen in schematischer Darstellung.

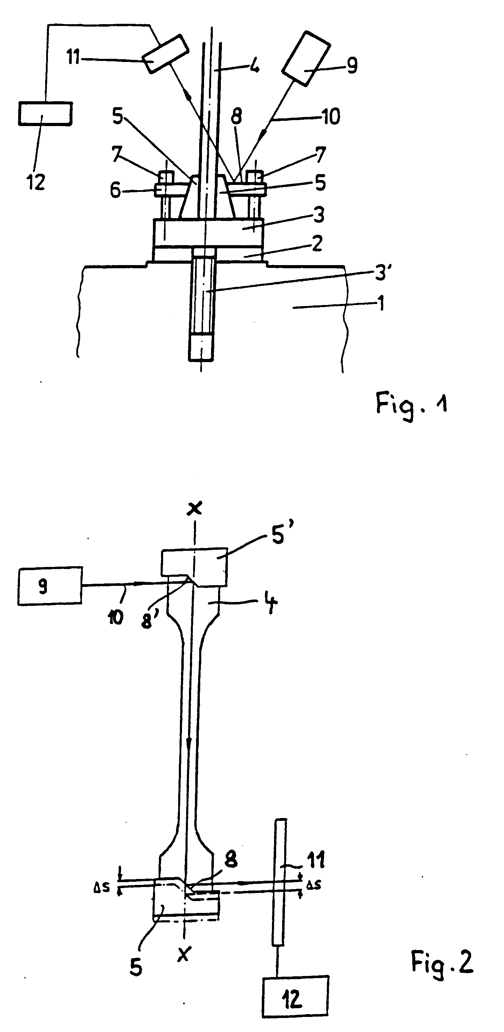

In Fig. 1 ist die Quertraverse 1 der nicht dargestellten Prüfmaschine schematisch angedeutet. Gegen die Quertraverse 1 ist eine leichte Kraftmeßeinrichtung bzw. ein Kraftaufnehmer 2, der z. B. als piezo-elektrischer Meßring ausgebildet sein kann, mit Hilfe einer Grundplatte 3 verspannt. Die Verspannung des Kraftaufnehmers 2 wird so gewählt, daß an der Einspannvorrichtung sowohl Druckkräfte als auch Zugkräfte übertragen werden können. Die Verspannung kann z. B. über eine mittig angeordnete Spannschraube 3' erfolgen. Die Grundplatte 3 ist an ihrer Unterseite an die Aufnahme des Kraftaufnehmers 2 angepaßt und damit Bestandteil des Aufnehmers.

Auf ihrer Oberseite trägt die Grundplatte 3 die eigentliche Spann- oder Klemmvorrichtung zur Aufnahme einer Probe 4. Das Einspannen oder Klemmen der Probe 4 erfolgt durch die Keil- oder Spannbacken 5, die über das Spannjoch 6 mit Hilfe der Schrauben 7 betätigt werden. Hierbei werden die keilförmig ausgebildeten Spannbacken 5 durch das ebenfalls mit Keilflächen versehene Spannjoch 6 gegeneinander gedrückt und klemmen dadurch die Probe 4 fest.

Auf der Grundplatte 3, oder wie im Ausführungsbeispiel in Fig. 1 der Zeichnung dargestellt, auf dem Spannjoch 6 ist eine Spiegelfläche 8 angeordnet, die zur Wegmessung an der Einspannvorrichtung dient. Ein durch eine Lichtquelle 9, insbesondere eine Laser-Lichtquelle erzeugter Lichtstrahl 10 wird auf die Spiegelfläche 8 und von hier auf einen Positionsdetektor 11 gelenkt. Der Detektor ist als photo-elektrischer Positionsdetektor ausgebildet, der es ermöglicht, die Lage eines Lichtpunktes auf dem Detektor exakt zu erfassen. Hierbei wandelt der Positionsdetektor Lichtpunkte in positionsabhängige Photoströme um, die in einer elektronischen Auswerteeinrichtung 12 als positionsproportionale Spannungen ausgewertet werden. Bewegungen der Spiegelfläche 8 erzeugen einen wandernden Lichtpunkt, dessen jeweilige Lage erfaßt und ausgewertet wird. Die Bewegungen des Lichtpunktes stellen ein Maß für die Bewegungen der Spiegelfläche und damit auch für Bewegungen an der Probe dar. Mit der Anordnung können insbesondere genaue Wegmessungen bei schnellen Prüfabläufen durchgeführt werden.

Bei der in Fig. 2 dargestellten Probeneinspannvorrichtung ist die zu untersuchende Probe 4 (Flachprobe, Rundprobe) in zwei Einspannköpfen einer nicht näher dargstellten Prüfmaschine eingespannt. Jeder der Einspannköpfe weist Spannbakken 5 bzw. 5' zum Einspannen der Probe 4 auf. Bei Kraftbeaufschlagungen der Probe 4 über die Einspannköpfe stellt sich eine Verformung der Probe 4 ein, die lichtoptisch ermittelt wird. Einer der Einspannköpfe ist prinzipiell wie der Einspannkopf mit Kraftmeßeinrichtung 2 nach Fig. 1 ausgebildet.

Der Lichtstrahl 10 einer punktförmigen Lichtquelle 9 wird auf eine Spiegelfläche des in Fig. 1 oberen Einspannkopfes, im Beispiel auf die Spiegelfläche 8' der Spannbacke 5' gerichtet. Die Spiegelfläche kann an der Spannbacke ausgeformt und durch entsprechende Bearbeitung wie z. B. Schleifen und Polieren hergestellt sein. Es kann jedoch auch ein separates Spiegelelement an der Spannbacke durch z. B. Kleben befestigt sein.

An der Spiegelfläche 8' wird der Lichtstrahl 10 umgelenkt und läuft parallel zur Längsachse X-X der Probe 4 bzw. der Kraftübertragungsachse in Richtung auf die Spannbacke 5 des unteren Einspannkopfes. Der Lichtstrahl 10 trifft auf die Spiegelfläche 8 an der Spannbacke 5 dieses Einspannkopfes und wird dort in Richtung auf den Positionsdetektor 11 umgelenkt. Der der Lichtquelle 9 zugeordnete obere Einspannkopf kann als bei der Verformung der Probe 4 feststehender oder als bei der Verformung der Probe 4 sich entsprechend bewegender Einspannkopf vorgesehen sein; im ersten Fall bewegt sich dann der untere Einspannkopf entsprechend der Probenverformung, im zweiten Fall ist der untere Einspannkopf feststehend angeordnet. Der im dargestellten Beispiel bei einer Probenverformung feststehende obere Einspannkopf und die Lichtquelle 9 können vorteilhaft an der Quertraverse einer Prüfmaschine angeordnet sein. Dabei kann die Lichtquelle 9 mit dem Einspannkopf verbunden sein.

Im Ausführungsbeispiel nach Fig. 2 verläuft die Richtung des aus der Lichtquelle 9 austretenden Strahls 10 orthogonal zu der durch die Längsachse X-X der Probe 4 bzw. die Kraftübertragungsachse definierten Richtung. Die im Ausführungsbeispiel als Spiegelebenen ausgebildeten Spiegelflächen der beiden Spiegel sind unter 45° zur Längsachse, einander zugewandt und zueinander parallel angeordnet. Die Abschnitte des Lichtstrahls 10 zwischen Lichtquelle 9 und Spiegelfläche 8', zwischen den beiden Spiegelflächen 8' und 8 und zwischen der Spiegelfläche 8 und dem Positionsdetektor 11 liegen alle in einer gemeinsamen Ebene, zu der die Spiegelebenen orthogonal angeordnet sind. Die Lichtquelle 9 liegt auf einer Seite der Längsachse X-X, während der Positionsdetektor 11 auf der anderen Seite der Längsachse X-X angeordnet ist.

Im dargestellten Beispiel ergibt sich bei einer Längenänderung $\Delta$ s der Probe 4 eine Strahlablenkung, die im Detektor 11 abgebildet und in der Auswerteelektronik 12 ermittelt und z. B. angezeigt wird.

Es können sowohl analog als auch digital arbeitende Detektoren verwendet werden.

Wie sich aus der Darstellung in Fig. 2 leicht erkennen läßt, führen Absolutbewegungen der Prüfmaschine in vertikaler Richtung, d. h. Bewegungen der skizzierten Anordnung nach oben oder unten, die von der Probe 4 und den Spiegelflächen 8, 8' mitgemacht werden, nicht zu Beeinträchtigungen des Meßergebnisses, da die Absolutbewegungen vollständig kompensiert werden. Werden beide Spiegel beispielsweise in belastungsfreiem Zustand in gleicher vertikaler Richtung um jeweils den gleichen Weg verschoben, so ändert sich der Auftreffort des Lichtstrahls 10 auf dem Positionsdetektor 11 auch dann nicht, wenn Lichtquelle 9 und Positionsdetektor 11 die Absolutbewegungen nicht mitmachen.

Die erfindungsgemäße Probeneinspannvorrichtung, insbesondere in der Ausgestaltung nach Fig. 2 ist besonders geeignet zur Messung der Probenverformung und/oder Verformungsgeschwindigkeit bei Schnellzerreißmaschinen. Bei solchen Maschinen ist die Messung unmittelbar an der Probe äußerst aufwendig. Mit der erfindungsgemäßen Probeneinspannvorrichtung kann die in die Probe eingeleitete Verformung sowie die Verformungsgeschwindigkeit bei Prüfabläufen mit hohen Geschwindigkeiten ermittelt werden. Mit der Anordnung lassen sich statische und/oder dynamische Verformungen durch Zug- oder Druckkräfte sowie Verformungen infolge von Drehmomenten und Biegemomenten erfassen, wobei die Verformungen im Mikrometerbereich liegen können. Es können auch Rißaufweitungen gemessen werden.

Es ist zweckmäßig, digital arbeitende Positionsdetektoren zu verwenden, da mit solchen Detektoren die Unterdrückung von Streulichteinflüssen mit elektronischen Mitteln leicht möglich ist. Der Positionsdetektor 11 kann als ein- achsiger oder zweiachsiger Detektor ausgebildet sein, d. h. er kann Lichtpunktverschiebungen in einer oder zwei Achsen erfassen. Hierbei können Verformungen bzw. Abstände im Mikrometerbereich gemessen werden.

**Patentansprüche**

1. Probeneinspannvorrichtung für Prüfmaschinen, insbesondere für Schnellzerreißversuche, mit einem Einspannkopf und einer am Einspannkopf angeordneten Kraftmeßeinrichtung (2), die mit einem festen oder beweglichen Teil der Prüfmaschine verbunden ist, dadurch gekennzeichnet, daß der Einspannkopf eine Grundplatte (3) für die Einspannelemente aufweist, daß die eine Seite der Grundplatte (3) für die Aufnahme der Einspannelemente und die andere Seite für den Anbau der Kraftmeßeinrichtung (2) ausgebildet sind, daß die Kraftmeßeinrichtung (2) mit der Grundplatte (3) gegen eine Quertraverse (1), eine Tischplatte oder dergl. als Gegenlager an der Prüfmaschine verspannt ist und daß an der Grundplatte (3) oder an anderen geeigneten Flächen des Einspannkopfes eine Spiegelfläche (8) angeordnet ist, über die ein von einer Lichtquelle (9) erzeugter Lichtstrahl (10) zum Zweck der Verformungsmessung auf einen Positionsdetektor (11) gelenkt wird, der mit einer Auswerteelektronik (12) verbunden ist.

2. Probeneinspannvorrichtung nach Anspruch 1, dadurch gekennzeichnet, daß die Kraftmeßeinrichtung (2) aus einem in Wirkungsrichtung der zu messenden Kraft steifen piezo-elektrischen Meßring besteht.

3. Probeneinspannvorrichtung nach einem oder beiden der vorhergehenden Ansprüche, dadurch gekennzeichnet, daß ein weiterer Einspannkopf mit einer Spiegelfläche (8') vorgesehen ist, daß die Spiegelflächen (8, 8') unter einem Winkel zur Längsachse der Probe (4) bzw. zur Kraftübertragungsachse und zueinander parallel angeordnet sind, und daß der Lichtstrahl (10) der Lichtquelle (9) von der an dem einen Einspannkopf angeordneten Spiegelfläche (8 oder 8') im wesentlichen parallel zur Längsachse (X-X) bzw. zur Kraftübertragungsachse auf die an dem anderen Einspannkopf angeordnete Spiegelfläche (8' oder 8) und von dort auf den Positionsdetektor (11) fällt.

4. Probeneinspannvorrichtung nach Anspruch 3, dadurch gekennzeichnet, daß die Lichtquelle (9) mit ihrer Strahlachse im wesentlichen rechtwinklig zur Längsachse (X-X) bzw. Kraftübertragungsachse und in einer rechtwinklig zu den Spiegelflächen (8, 8') verlaufenden Ebene angeordnet ist, wobei die Spiegelflächen (8, 8') unter einem Winkel von 45° zur Längsachse bzw. Kraftübertragungsachse angeordnet sind.

5. Probeneinspannvorrichtung nach einem oder mehreren der vorhergehenden Ansprüche, dadurch gekennzeichnet, daß die Spiegelfläche (8, 8') am Einspannkopf ausgeformt ist.

6. Probeneinspannvorrichtung nach einem oder mehreren der vorhergehenden Ansprüche, dadurch gekennzeichnet, daß beide Einspannköpfe an den Enden der Probe (4) angeordnet sind.

7. Probeneinspannvorrichtung nach einem oder mehreren der vorhergehenden Ansprüche, gekennzeichnet durch die Verwendung zur Messung von Dehnungen, Biegungen, Rißaufweitungen und von schnellen Bewegungsabläufen bei Proben (4) oder zur gleichzeitigen Messung von mehreren der genannten Verformungsarten.

8. Probeneinspannvorrichtung nach einem oder mehreren der vorhergehenden Ansprüche, dadurch gekennzeichnet, daß der Positionsdetektor (11) als analog oder digital arbeitender Detektor ausgebildet ist.

9. Probeneinspannvorrichtung nach einem oder mehreren der vorhergehenden Ansprüche, dadurch gekennzeichnet, daß der Positionsdetektor (11) als ein- oder zweiachsiger Detektor ausgebildet ist.

10. Probeneinspannvorrichtung nach einem oder mehreren der vorhergehenden Ansprüche, dadurch gekennzeichnet, daß die Lichtquelle (9) eine punktförmige Lichtquelle (9), insbesondere eine Laser-Lichtquelle, ist.

**Claims**

1. A clamping device for a specimen for testing machines, more particularly for rapid tensile tests, having a clamping head and, arranged on the clamping head, a force measuring device (2) which is connected to a fixed or movable part of the testing machine, **characterised in that** the clamping head has a base plate (3) for the clamping elements, that one side of the base plate (3) is formed for receiving the clamping elements and the other side is formed for attachment of the force-measuring device (2), that the force-measuring device (2) with the base plate (3) is braced against a cross bar (1), a table plate or the like as an abutment on the testing machine and that a mirror surface (8) is arranged on the baseplate (3) or on other suitable surfaces of the clampinng head, via which mirror surface (8) a beam of light (10) produced by a light source (9) is directed for the purpose of deformation measurement on to a position detector (11) which is connected to an electronic evaluation unit (12).

2. A clamping device for a specimen according to claim 1, **characterised in that** the force measuring device (2) consists of a piezoelectric measuring ring which is rigid in the direction of action of the force to be measured.

3. A clamping device for a specimen according to any one or both of the preceding claims, **characterised in that** a further clamping head is provided with a mirror surface (8'), that the mirror surfaces (8,8') are arranged at an angle to the longitudinal axis of the specimen (4) and/or to the force transmission axis and parallel to each other and that the beam of light (10) of the light source (9) falls from the mirror surface (8 or 8') arranged on one clamping head essentially parallel to the longitudinal axis (X-X) and/or to the force transmission axis on to the mirror surface (8' or 8) arranged on the other clamping head and from there on to the position detector (11).

4. A clamping device for a specimen according to claim 3, **characterised in that** the light source (9) is arranged with its beam axis essentially perpendicular to the longitudinal axis (X-X) and/or force transmission axis and is arranged in a plane running perpendicularly to the mirror surfaces (8,8'), the mirror surfaces (8,8') being arranged at an angle of 45 degrees to the longitudinal axis and/or force transmission axis.

5. A clamping device for a specimen according to one or more of the preceding claims, **characterised in that** the mirror surface (8,8') is shaped out at the clamping head.

6. A clamping device for a specimen according to one or more of the preceding claims, **characterised in that** both clamping heads are arranged at the ends of the specimen (4).

7. A clamping device for a specimen according to one or more of the preceding claims, **characterised by** use for measuring strain, flexure, crack enlargement and rapid movements in specimens (4) or for measuring several of the said types of deformation at the same time.

8. A clamping device for a specimen according to one or more of the preceding claims, **characterised in that** the position detector (11) is formed as an analogue or digitally operating detector.

9. A clamping device for a specimen according to one or more of the preceding claims, **characterised in that** the position detector (11) is formed as a one- or two-axis detector.

10. A clamping device for a specimen according to one or more of the preceding claims, **characterised in that** the light source (9) is a punctiform light source (9) more particularly a laser light source.

**Revendications**

1. Dispositif de fixation d'échantillons pour machines d'essai, en particulier pour essais de rupture rapide, avec une tête de serrage et un dispositif de mesure dynamométrique (2), disposé sur la tête de serrage, relié à une partie fixe ou mobile de la machine d'essai, caractérisé en ce que la tête de serrage présente une plaque de base (3) pour les éléments de fixation, en ce que l'un des côtés de la plaque de base (3) est réalisé pour recevoir les éléments de fixation et l'autre côté pour le montage du dispositif dynamométrique (2), en ce que le dispositif dynamométrique (2) est serré avec la plaque de base (3) contre une traverse transversale (1), une plaque de table ou analogue, servant de contre appui sur la machine d'essai et en ce que, sur la plaque de base (3), ou sur d'autres surfaces appropriées de la tête de serrage est disposée une surface réfléchissante (8), sur laquelle le rayon lumineux (10) produit par une source lumineuse (9) est dévié sur un détecteur de position (11) relié à une électronique d'exploitation (12), en vue de mesurer la déformation.

2. Dispositif de fixation d'échantillons selon la revendication 1, caractérisé en ce que le dispositif dynamométrique (2) est composé d'une bague de mesure piézo-électrique, rigide dans la direction d'action de la force à mesurer.

3. Dispositif de fixation d'échantillons selon l'une ou les deux revendications précédentes, caractérisé en ce qu'une autre tête de serrage est prévue d'une surface réfléchissante (8'), en ce que les surfaces réfléchissantes (8,8') sont disposées de façon à faire un certain angle par rapport à l'axe longitudinal de l'échantillon (4), ou à l'axe de transmission de l'effort, et parallèles entre elles, et en ce que le rayon lumineux (10) de la source lumineuse (9), en partant de la surface réfléchissante (8 ou 8') disposée sur une tête de serrage, se propage pratiquement parallèlement à l'axe longitudinal (X-X), ou à l'axe de transmission de l'effort, et tombe sur la surface réfléchissante (8' ou 8) disposée sur l'autre tête de serrage et, de là, sur le détecteur de position (11).

4. Dispositif de fixation d'échantillons selon la revendication 3, caractérisé en ce que la source lumineuse (9) est disposée avec son axe de rayonnement sensiblement perpendiculaire à l'axe longitudinal (X-X), ou l'axe de transmission de l'effort et dans un plan qui s'étend perpendiculairement aux surfaces réfléchissantes (8,8'), les surfaces réfléchissantes (8,8') étant disposées sous un angle de 45° par rapport à l'axe longitudinal, ou à l'axe de transmission de l'effort.

5. Dispositif de fixation d'échantillons selon l'une ou plusieurs revendications précédentes, caractérisé en ce que la surface réfléchissante (8,8') est formée sur la tête de serrage même.

6. Dispositif de fixation d'échantillons selon l'une ou plusieurs revendications précédentes, caractérisé en ce que les deux têtes de serrage sont disposées aux extrémités de l'échantillon (4).

7. Dispositif de fixation d'échantillons selon l'une ou plusieurs revendications précédentes, caractérisé par l'utilisation, pour la mesure des allongements, flexions, élargissements de fissures et des évolutions rapides du mouvement dans des échantillons (5), ou pour la mesure simultanée de plusieurs des types de déformation cités.

8. Dispositif de fixation d'échantillons selon l'une ou plusieurs revendications précédentes, caractérisé en ce que le détecteur de position (11) est réalisé sous forme de détecteur analogique ou numérique.

9. Dispositif de fixation d'échantillons selon l'une ou plusieurs revendications précédentes, caractérisé en ce que le détecteur de position (11) est réalisé sous forme de détecteur à un ou deux axes.

10. Dispositif de fixation d'échantillons selon l'une ou plusieurs revendications précédentes, caractérisé en ce que la source lumineuse (9) est une source lumineuse ponctuelle (9), en particulier une source lumineuse laser.

Fig. 1

Fig.2